# EUROPEAN PATENT APPLICATION

(11) **EP 3 943 464 A1**
(43) Date of publication of application: **26.01.2022**
(21) Application number: 21020211.5
(22) Date of filing: 10.10.2019
(51) Int. Cl.: C04B 18/02

(54) **A NOVEL LIGHTWEIGHT CERAMIC SAND FORMULATION FROM LIGNITE FLY ASH AND METHOD OF PREPARATION THEREOF**

(62) Divisional of application: 19020567.4
(71) Applicant: Khan, Abbas, 08064 Zwickau (DE)
(72) Inventor: Khan, Abbas, 08064 Zwickau (DE)

(57) **Abstract**

The present invention discloses a novel lightweight ceramic sand formulation. The present invention particularly discloses the novel light weight ceramic sand formulation from lignite fly ash. More particularly, the present invention discloses lightweight ceramic formulation from lignite fly-ash and the method of preparation thereof.

## Description

### REFERENCE TO RELATED APPLICATION

This divisional application is based on EP patent application No. EP19020567 filed on 10 October 2019 and entitled "A method of producing lightweight ceramic sand from lignite fly ash, composition and use thereof', which are all herein incorporated by reference in their entirety.

### Technical Field of the Invention:

The present invention relates to a novel lightweight ceramic sand formulation. The present invention particularly relates to the novel light weight ceramic sand formulation from lignite fly ash. More particularly the present invention relates to lightweight ceramic formulation from lignite fly-ash and the method of preparation thereof.

### Objective of the Invention:

The main objective of the invention is to provide a novel, simple and economical formulation of well-defined ceramic lightweight sand from lignite fly ash.

Another objective of the invention is to provide an alternative way of substituting natural sand, manufactured sand (also known as crushed stones), and light fine aggregates to produce concrete, plasters, mortars, renders, façade, and roof tiles.

Yet another objective of the invention is to provide an alternative way of substituting foundry sand for moulding.

Another objective of the present invention is to manufacture the said product using lignite fly ash which is an undesirable by-product and/or wastage.

Other objective of the present invention is to manufacture ceramic lightweight sand at high throughput and at lowest manufacturing cost without the need of disposing unused lignite fly ash.

### Summary of the Invention:

Generally in one aspect, the present invention discloses a novel formulation of lightweight ceramic sand.

In another aspect, the present invention discloses the aforementioned end product is produced from lignite fly ash.

In yet another aspect, the present invention relates to fabrication of ceramic lightweight sand at high throughput and low manufacturing cost to provide an alternative to the fast-depleting natural sand including crushed stones and lightweight fine aggregates produced from expanded clay, expanded glass and volcanic activities.

In still another aspect, the present invention provides a novel lightweight ceramic sand formulation from lignite fly ash wherein, said formulation comprises:
a) lignite fly ash 50-99 wt%;
b) hard coal fly ash 0.1-49 wt%;
c) bauxite residue 0.1-49 wt%;
d) biomass-coal fly ash 0.1-49 wt%;
e) glass waste 0.1-15 wt%;
f) ceramic waste 0.1-25 wt%;
g) waste-to-energy ash 0.1-10 wt%;
h) bentonite 1-10 wt%

In yet another aspect, the invention further provides a method of preparation of the aforementioned lightweight ceramic sand utilising the aforementioned formulation.

Other aspects of the present invention are disclosed in the appended drawings and the following description.

### Detailed Description of the Invention:

The present invention may be understood more readily by reference to the following detailed description of the invention taken in connection with the accompanying drawing figures, which forms a part of this disclosure. It is to be understood that this invention is not limited to the specific devices, methods, conditions or parameters described and/or shown herein and that the terminology used herein is for the example only and is not intended to be limiting of the claimed invention. Also, as used in the specification including the appended claims, the singular forms 'a', 'an', and 'the' include the plural, and references to a particular numerical value includes at least that particular value unless the content clearly directs otherwise. Ranges may be expressed herein as from 'about' or 'approximately' another particular value. when such a range is expressed another embodiment. Also, it will be understood that unless otherwise indicated, dimensions and material characteristics stated herein are by way of example rather than limitation and are for better understanding of sample embodiment of suitable utility, and variations outside of the stated values may also be within the scope of the invention depending upon the particular application.

This invention is not in its application to the details of construction and the arrangement of components set forth. In the following description or illustrated in the following description or illustrated in the drawings. The invention is capable of other embodiments and of being practiced or of being carried out in various ways. Also, the phraseology and terminology used herein for the purpose of description and should not be regarded as limiting. The use of "including", "comprising", "having", "containing", "involving", and variations thereof as well as additional items.

In order to achieve a better understanding of the nature of the present invention a preferred embodiment of a novel formulation of ceramic lightweight sand will now be explained.

In one embodiment, the present invention discloses a formulation of light weight ceramic sand particles from lignite fly ash and method of preparation thereof.

It is to be understood that the term "lignite fly ash" hereinafter refers to a by-product produced during the burning of lignite or brown coal by thermal power plants, having at least silica (30-59 wt%), alumina (8-20 wt%), iron oxide (6-17 wt%), lime (9-25 wt%) and LoI (2-15 wt%).

It is to be understood that the term "hard coal fly ash" hereinafter refers to a by-product produced during the burning of hard or brown coal by thermal power plants, having at least silica (45-65wt%), alumina (10-25 wt%), iron oxide (3-15 wt%), lime (2-8 wt%) and LoI (2-15 wt%).

It is to be understood that the term "bauxite residue" hereinafter refers to partially dried bauxite residue with moisture content less than 18 wt% and is a by-product produced during the production of alumina from bauxite ore (Bayer process), having at least iron oxide (32-52 wt%), alumina (10-20 wt%), silica (7-14 wt%), titanium oxide (3-12 wt%), lime (3-14 wt%) and sodium oxide (2-9 wt%), and the term "bauxite residue" is not restricted to the type of bauxite ore used in the Bayer process.

It is to be understood that the term "biomass-coal fly ash (BCA)" hereinafter refers to a by-product produced during the burning of a mixture of biomass and hard or brown coal, having at least silica (28-67wt%), alumina (6-25 wt%), iron oxide (1-7 wt%), lime (3-22 wt%), aggregate sodium and potassium oxide (2- 10 wt%) and LoI (2-12 wt%). BCA may need to screen to remove sandy and char materials before the granulation process. BCA can also be a desulphurized.

It is to be understood that the term "waste-to-energy ash (WTA)" hereinafter refers to a by-product produced during the burning of waste materials having at least silica (20-40wt%), alumina (6-20 wt%), iron oxide (1-5 wt%), lime (12-35 wt%), aggregate sodium and potassium oxide (2- 12 wt%) and LoI (2-12 wt%).

It is to be understood that the term "glass waste (GW)" hereinafter refers to finely grinded mixture of glass bottles, jars, table ware, flat glass, windows, etc. having at least silica >65wt%. The waste glass can either from soda-lime glass, borosilicate glass or the mixture of both soda-lime glass and borosilicate glass.

The term "ceramic waste (CW)" hereinafter refers to finely grinded ceramic tiles or ceramic wastes, having at least silica (32-69 wt%), alumina (14-40 wt%), iron oxide (2-8 wt%), lime (2-8 wt%), aggregate sodium and potassium oxide (4-12 wt%) and LoI (1-10 wt%).

According to the one embodiment of the present invention, the novel formation formulation of lightweight ceramic sand particle may comprise but not limited to lignite fly ash, hard coal fly ash, bauxite residue, biomass-coal ash, waste-to-energy ash, ceramic wastes, glass wastes and bentonite. It is pertinent to note that the above-mentioned components of the formulation may be used alone or in combination.

In another embodiment of the present invention, the aforementioned formulation may be composed of lignite fly ash as a primary raw material of said formulation.

In another embodiment of the present invention, the aforementioned formulation may be composed of hard coal fly ash as a secondary raw material of said formulation.

In another embodiment of the present invention, the aforementioned formulation may be composed of biomass-coal ash as a secondary raw material of said formulation.

In another embodiment of the present invention, the aforementioned formulation may be composed of bauxite residue as a secondary raw material of said formulation.

In another embodiment of the present invention, the aforementioned formulation may be composed of waste-to-energy ash as a secondary raw material of said formulation.

In another embodiment of the present invention, the aforementioned formulation may be composed of ceramic waste as a secondary raw material of said formulation.

In another embodiment of the present invention, the aforementioned formulation may be composed of glass waste as a secondary raw material of said formulation.

In another embodiment of the present invention, the aforementioned formulation may be composed of bentonite as a binder in said formulation.

In another embodiment of the present invention further disclosed a method of manufacturing lightweight fine particulates utilising the aforementioned formulation wherein the process steps are as follows:
i. Mixing the primary and secondary raw materials using high intensity shear-mixer;
ii. Spraying water into the same high intensity shear-mixer to form granules with sub-round shapes;
iii. Drying the granules using either fluidized bed drying process or mesh belt dryer;
iv. Sintering dried granules at high temperature in range of 950-1,250°C

### EXPERIMENTAL DESCRIPTION

The below experimental details are provided to illustrate the working of the invention, and it should not be construed to limit the scope of the invention in any way.

It is pertinent to note that the formulations may be prepared by the combination of components alone or in the combination as indicated in Table 1 - Table 3. The combination in any table does not limit the scope of the invention.

The ratio of the said combination for lignite fly ash, hard coal fly ash, bauxite residue, biomass-coal fly ash; glass waste; ceramic waste; waste-to-energy ash and bentonite are prepared as indicated in Table 1-3.

The ratio of the said combination is put together and mixed in the high intensity shear-mixer. The blending and mixing is carried out for up to 1-2 mins to ensure homogeneous mixing. Water is added up to 18wt% to the mixture. This addition of water is performed under rotating condition of both rotor and pan. The rotation is carried out for 3-6 minutes. During the rotation procedure plurality of granules/spheres is formed. The granules thus obtained are herein referred to as sand precursor.

The moistened sand precursors are then dried using fluidized bed dryer. The residence time of fine particulates in the dryer depends upon several factors such as dryer's length, drying temperature, drying duration and air flow. For the experiment temperature of the dryer used in the range of about 125-250°C and air feed between 750-1,500 m3/h and drying duration 4-8 minutes.

Dried sand precursors which has moisture between 1-5 wt% are fired in rotary kiln. The residence time of sand precursors in the kiln depends on several factors such as kiln length, temperature of the kiln which is in the range of about 975-1,300°C, chemical composition, particulate size, throughput and temperature of sand precursors. The particle size of the resultant light ceramic sand obtained is in the range of 0- 4.0 mm, the bulk density of the resultant light ceramic sand obtained is in the range of 825 kg/m³ - 1,190 kg/m³

**Table 1**

| **Formulation - 1** | | **Formulation -2** | | **Formulation -3** | |
|---|---|---|---|---|---|
| Chemicals | g | Chemicals | g | Chemicals | g |
| Lignite fly ash | 50-98.9 | Lignite fly ash | 50-98.9 | Lignite fly ash | 50-98.8 |
| BCA | 0.1-49 | BR | 0.1-49 | BCA | 0.1-49 |
| | | | | BR | 0.1-49 |
| Bentonite | 1-10 | Bentonite | 1-10 | Bentonite | 1-10 |
| **Total** | **100** | **Total** | **100** | **Total** | **100** |
| Water | 14-28 | Water | 14-28 | Water | 14-28 |

**Table 2**

| **Formulation - 4** | | **Formulation -5** | | **Formulation -6** | |
|---|---|---|---|---|---|
| Chemicals | g | Chemicals | g | Chemicals | g |
| Lignite fly ash | 50-98.8 | Lignite fly ash | 50-98.8 | Lignite fly ash | 50-98.7 |
| BCA | 0.1-49 | BR | 0.1-49 | BCA | 0.1-49 |
| | | | | BR | 0.1-49 |
| WTA | 0.1-7.5 | WTA | 0.1-7.5 | WTA | 0.1-7.5 |
| Bentonite | 1-10 | Bentonite | 1-10 | Bentonite | 1-10 |
| **Total** | **100** | **Total** | **100** | **Total** | **100** |
| Water | 14-28 | Water | 14-28 | Water | 14-28 |

**Table 3**

| **Formulation - 7** | | **Formulation -8** | |
|---|---|---|---|
| Chemicals | g | Chemicals | g |
| Lignite fly ash | 50-98.7 | Lignite fly ash | 50-98.7 |
| BCA | 0.1-49 | BCA | 0.1-49 |
| BR | 0.1-49 | BR | 0.1-49 |
| GW | 0.1-15 | CW | 0.1-25 |
| Bentonite | 1-10 | Bentonite | 1-10 |
| **Total** | **100** | **Total** | **100** |
| Water | 14-28 | Water | 14-28 |

The examples and embodiments shown above are intended to be merely exemplary and those skilled in the art shall be able to make numerous variations and modifications to it without departing from the spirit of the present invention. All such variations and modifications are intended to be within the scope of the present invention as defined in the appended claims.

### ADVANTAGES:

1.Lignite fly ash, biomass-coal fly ash, bauxite residue as well as waste-to-energy ash, the raw materials are inexpensive making the man-made ceramic sand competitive and thus helps alleviate a waste disposal problem.
2. Substitution of natural sand with lightweight ceramic sand produced from different industrial wastes i.e., lignite fly ash, biomass-coal fly ash and bauxite residue, supports protection of these habitats where natural sand is sourced.
3.Another advantage of the present invention is to development one step manufacturing process which can solve disposal problem of some highly hazardous industrial waste such as waste-to-energy ash.
4.Another advantage of the present invention to have better compressive strength of concrete and mortars while offering lightweight benefits at the same time.

## Claims

1. A novel lightweight ceramic sand formulation from lignite fly ash wherein, said formulation comprises:
A. lignite fly ash 50-99 wt%;
B. hard coal fly ash 0.1-49 wt%;
C. bauxite residue 0.1-49 wt%;
D. biomass-coal fly ash 0.1-49 wt%:
E. waste-to-energy ash 0.1-10 wt%;
F. glass waste 0.1-15 wt%;
G. ceramic waste 0.1-25 wt%;
H. bentonite 1-10 wt%
wherein, in addition to the above mentioned components additional components is further added to the said formulation.

2. The novel lightweight ceramic sand formulation as claimed in claim 1 wherein, the aforementioned formulation is composed of lignite fly ash as a primary raw material of said formulation in the range 50-99 wt%.

3. The novel lightweight ceramic sand formulation as claimed in claim 1 wherein, the aforementioned formulation is composed of hard coal fly ash as a secondary raw material of said formulation in the range 0.1-49 wt%.

4. The novel lightweight ceramic sand formulation as claimed in claim 1 wherein, the aforementioned formulation is composed of biomass-coal fly ash as a secondary raw material of said formulation in the range 0.1-49 wt%.

5. The novel lightweight ceramic sand formulation as claimed in claim 1 wherein, the aforementioned formulation is composed of waste-to-energy ash in the range 0.1-10 wt%.

6. The novel lightweight ceramic sand formulation as claimed in claim 1 wherein, the aforementioned formulation is composed of glass waste in the range 0.1-15 wt%.

7. The novel lightweight ceramic sand formulation as claimed in claim 1 wherein, the aforementioned formulation is composed of ceramic waste in the range of 0.1-25 wt%.

8. The novel lightweight ceramic sand formulation as claimed in claim 1 wherein, the aforementioned formulation is composed of bauxite residue as a secondary raw material of said formulation in the range 0.1-49 wt%.

9. The novel lightweight ceramic sand formulation as claimed in claim 1 wherein, the additional components in aforementioned formulation is selected from the group consisting of SiO₂, Al₂O₃, Fe₂O₃, CaO, free lime, SO₃ etc.

10. The novel lightweight ceramic sand formulation as claimed in claim 1 wherein, the particle size of the resultant light ceramic sand obtained is in the range of 0-4.0 mm.

11. The novel lightweight ceramic sand formulation as claimed in claim 1 wherein, the bulk density of the resultant light ceramic sand obtained is in the range of 825-1,190 kg/m³.

12. The novel lightweight ceramic sand formulation as claimed in claim 1 wherein, the particle density of the resultant light ceramic sand obtained is in the range of 1,600-2,250 kg/m³.

13. The novel lightweight ceramic sand formulation as claimed in claim 1 wherein, the free lime content in the resultant light ceramic sand obtained is in less than 3 wt%.

14. The novel lightweight ceramic sand formulation as claimed in claim 1 wherein, it meets the harmonized norm DIN EN 13055:2016.

15. A method for the preparation of formulation as claimed in claim 1 wherein, the method comprises:
i. mixing the raw materials using high intensity shear-mixer;
ii. spraying water into the same high intensity shear-mixer to form granules with sub-round shapes;
iii. drying the granules using either fluidized bed drying process or mesh belt dryer;
iv. sintering dried granules at high temperature in range of 950-1,250°C to obtain the claimed lightweight ceramic sand formulation.
